# EUROPÄISCHE PATENTSCHRIFT

(11) **EP 3 668 771 B1**
(45) Veröffentlichungstag und Bekanntmachung des Hinweises auf die Patenterteilung: **04.08.2021**
(21) Anmeldenummer: 18785842.8
(22) Anmeldetag: 25.09.2018
(51) Int. Cl.: B61D 19/02, B60J 5/04

(54) **KUNDENSPEZIFISCHES FAHRZEUGTÜRBLATT Z.B. FÜR EIN SCHIENENFAHRZEUG**
CUSTOMER-SPECIFIC VEHICLE DOOR LEAF, FOR EXAMPLE FOR A RAIL VEHICLE
VANTAIL DE PORTE DE VÉHICULE SPÉCIFIQUE AU CLIENT, PAR EXEMPLE POUR UN VÉHICULE FERROVIAIRE

(30) Priorität: 29.09.2017 DE 102017217360
(43) Veröffentlichungstag der Anmeldung: 24.06.2020
(73) Patentinhaber: Siemens Mobility GmbH, 81739 München (DE)
(72) Erfinder: KAMMERLOHER, Herbert, 82239 Biburg (DE); HENGSTENBERG, Thomas, 82194 Gröbenzell (DE); WIMBERGER, Thomas, 85356 Freising (DE)
(86) Internationale Anmeldenummer: PCT/EP2018/076022
(87) Internationale Veröffentlichungsnummer: WO 2019/063568

(56) Entgegenhaltungen:
- EP-A2- 2 799 305
- DE-A1- 4 407 731
- DE-A1-102008 021 224

## Beschreibung

Die Erfindung betrifft ein kundenspezifisches Schienenfahrzeug-Türblatt, bevorzugt ein nach innen öffnendes Fahrzeugtürblatt für eine Einstiegstür. Des Weiteren betrifft die Erfindung ein Fahrzeug, insbesondere ein Schienenfahrzeug, bevorzugt eine Lokomotive.

Bei einer bekannten Schienenfahrzeugtür sind ein tragender Schienenfahrzeug-Türblattrahmen eines Schienenfahrzeug-Türblatts der Schienenfahrzeugtür und eine Außenblende des Schienenfahrzeug-Türblatts mittels einer Verklebung im Wesentlichen unlösbar miteinander verbunden. Hierfür muss ein Hersteller eine hochwertige Qualifikation für Klebeverfahren vorweisen. Um bei einem bereits fertiggestellten Schienenfahrzeug-Türblatt eine Lackierung der Außenblende nach Wunsch ändern zu können, bedarf es aufwändiger Arbeiten (Abkleben, ggf. Entfernen von Dichtungen oder gar Ausbauen des Schienenfahrzeug-Türblatts aus einem Lokkasten).

Nachträglich kann immer nur bis zu vorhandenen Klebefugen (z.B. der eines integrierten Fensterrahmens) lackiert werden. Neben einem unschönen optischen Erscheinungsbild (exaktes Abkleben schwierig), besteht hier immer die Gefahr, dass ein Lack nicht ordentlich haftet, da ein Untergrund nicht richtig tragfähig ist, weil ein Anschleifen bis in eine Klebefuge nicht möglich ist und/oder eine entstehende Lackierung bis an/unter die Klebefuge laufen sollte. Ferner besteht die Gefahr, dass es schneller zu Korrosionsproblemen kommt, wenn eine angeschliffene Fläche nicht von einem neuen Decklack vollständig überdeckt ist.

Aus der Druckschrift DE 10 2008 021 224 A1 ist ein Türflügel für ein Schienenfahrzeug bekannt.

Aus der Druckschrift EP 2 799 305 A2 ist ein Wandungselement für ein Fahrzeug bekannt.

Es ist eine Aufgabe der Erfindung, die Herstellungs- und Betriebskosten (LCC: Life Cycle Costing, Lebenszykluskostenrechnung) für ein Schienenfahrzeug im Bereich einer Schienenfahrzeugtür vergleichsweise kurzfristig senken zu können, d.h. ohne dabei zu tief in eine Konstruktion des Schienenfahrzeugs eingreifen zu müssen. Da Eingriffe in ein Schienenfahrzeug-Türblatt nur vergleichsweise schwierig umgesetzt werden können, sollen die Kosten anderweitig gesenkt werden, wobei eine Funktionalität der Schienenfahrzeugtür wenigstens gleichbleiben soll.

Die Aufgabe der Erfindung ist mittels eines kundenspezifischen Schienenfahrzeug-Türblatts für eine Einstiegstür nach Anspruch 1, und mittels eines Schienenfahrzeugs nach Anspruch 10 gelöst. Vorteilhafte Weiterbildungen, zusätzliche Merkmale und/oder Vorteile der Erfindung ergeben sich aus den abhängigen Patentansprüchen und/oder der folgenden Beschreibung der Erfindung.

Das erfindungsgemäße kundenspezifische Fahrzeugtürblatt umfasst eine Blende und ein allgemeines Fahrzeugtürblatt, wobei das allgemeine Fahrzeugtürblatt einen tragenden Fahrzeugtürblattrahmen aufweist, und das allgemeine Fahrzeugtürblatt selbst druckdicht und wasserdicht ausgebildet ist und die Blende am Fahrzeugtürblattrahmen vorgesehen ist.

D.h. das allgemeine Fahrzeugtürblatt weist noch keine Blende, insbesondere noch keine Außenblende, auf. Erst das allgemeine Fahrzeugtürblatt und die Blende, insbesondere die Außenblende, bilden zusammen das kundenspezifische Fahrzeugtürblatt. Das kundenspezifische Fahrzeugtürblatt unterscheidet sich also wenigstens durch die Blende, insbesondere wenigstens die Außenblende, vom allgemeinen Fahrzeugtürblatt. Ferner kann z.B. eine Innenverkleidung zu einem kundenspezifischen Fahrzeugtürblatt gehören. Gemäß der Erfindung kann eine einzige Blende, insbesondere eine einzige Außenblende, oder eine Mehrzahl von Blenden, insbesondere eine Mehrzahl von Außenblenden, am Fahrzeugtürblattrahmen vorgesehen sein.

Unter einem kundenspezifischen Fahrzeugtürblatt ist ferner ein Fahrzeugtürblatt zu verstehen, welches die Eigenschaft besitzt, nach einem Wunsch eines Kunden einfach gestaltet zu werden. Eigentlich ist das kundenspezifische Fahrzeugtürblatt eher ein proto-kundenspezifisches Fahrzeugtürblatt, da ein kundenspezifisches Fahrzeugtürblatt erst die Eignung besitzt, nach dem Wunsch des Kunden einfach gestaltet bzw. umgestaltet zu werden und noch nicht derart gestaltet ist (Lackierung). Die Blende, insbesondere die Außenblende, kann gemäß der Erfindung unabhängig vom Fahrzeugtürblatt demontiert, vollständig und sauber geschliffen und lackiert bzw. nachlackiert werden. Außerdem kann eine beschädigte Außenblende schnell und problemlos getauscht werden, ohne dass das ganze Fahrzeugtürblatt getauscht werden muss.

Die Blende ist erfindungsgemäß als eine Außenblende außen am allgemeinen Fahrzeugtürblatt oder am Fahrzeugtürblattrahmen vorgesehen. Die Blende kann als eine einfach demontierbare Blende am allgemeinen Fahrzeugtürblatt oder am Fahrzeugtürblattrahmen vorgesehen sein. Eine mechanische Verbindung der Blende mit dem allgemeinen Fahrzeugtürblatt oder mit dem Fahrzeugtürblattrahmen kann einfach lösbar ausgebildet sein. D.h. ohne ein Beschädigen oder ein Zerstören eines mit der Blende verbundenen Teils des allgemeinen Fahrzeugtürblatts, ist die Blende vom allgemeinen Fahrzeugtürblatt demontierbar.

Die Blende kann dabei auf das allgemeine Fahrzeugtürblatt oder den Fahrzeugtürblattrahmen aufgeschraubt, aufgesteckt (z.B. mittels Federklemmen), aufgeklebt und/oder in einer sonstigen Weise leicht austauschbar befestigt sein. Ferner kann zwischen der Blende und dem allgemeinen Fahrzeugtürblatt oder dem Fahrzeugtürblattrahmen eine thermische Isolierung vorgesehen sein. Darüber hinaus kann die Blende als eine Aluminium-Sandwich-Blende oder eine GFK-Blende ausgebildet sein.

Das kundenspezifische Fahrzeugtürblatt weist erfindungsgemäß eine Innenverkleidung auf. Ferner ist das allgemeine Fahrzeugtürblatt als ein vollständig funktionstüchtiges Fahrzeugtürblatt ausgebildet. D.h. das allgemeine Fahrzeugtürblatt ist ohne seine kundenspezifische Ausgestaltung bzw. ohne Blende voll mechanisch funktionstüchtig und könnte bestimmungsgemäß eingesetzt werden (einmal von seiner optischen Funktion abgesehen). Des Weiteren weist das allgemeine Fahrzeugtürblatt ein Schachtfenster inkl. einer Mechanik; eine Aufsteckdichtung; eine Innenverkleidung; eine Lagereinrichtung und/oder eine Ausnehmung für eine Schlosseinrichtung etc. auf. Darüber hinaus ist der Fahrzeugtürblattrahmen selbst druckdicht und wasserdicht ausgebildet.

In einer Ausführungsform weist der Fahrzeugtürblattrahmen vier, den eigentlichen Fahrzeugtürblattrahmen konstituierenden Rahmenhohlprofile auf. Hierbei können die Rahmenhohlprofile aus zwei unterschiedlichen ursprünglichen Hohlprofilen bzw. Proto-Hohlprofilen hergestellt sein. Hierbei können in sämtlichen Ausführungsformen der Erfindung ein, eine Mehrzahl oder alle Rahmenhohlprofile durch ein bzw. mehrere Rahmenprofile substituiert sein.

In einem Eckbereich des Fahrzeugtürblattrahmens können einander betreffende Rahmenhohlprofile ineinander gesteckt und/oder geschäftet sein. Hierbei ist es bevorzugt, in allen vier Eckbereichen die einander betreffenden Rahmenhohlprofile ineinander zu stecken und/oder zu schäften. Ferner können in einem Eckbereich des Fahrzeugtürblattrahmens einander betreffende Rahmenhohlprofile miteinander vernietet (in einer Ausführungsform bevorzugt), verschraubt (in einer Ausführungsform bevorzugt) und/oder verschweißt sein und/oder durch eine sonstige Fügemethode verbunden sein, deren Funktionsprinzip auf einer Blechdoppelung beruht. Hierbei ist es bevorzugt, in allen vier Eckbereichen die einander betreffenden Rahmenhohlprofile miteinander zu vernieten, zu verschrauben und/oder zu verschweißen.

Einander betreffende Dichtungsränder einander betreffender Rahmenhohlprofile können in Umfangsrichtung des Fahrzeugtürblattrahmens im Wesentlichen fluchten. Hierdurch sind vollständig umlaufende Türdichtungen und ist eine vollständig umlaufende Fensterdichtung realisierbar. In einer Ausführungsform deckt die Blende einen Eckbereich des Fahrzeugtürblattrahmens ab. Hierbei ist es bevorzugt, alle vier Eckbereiche mittels der/einer Blende abzudecken. Ferner ist die Blende in einem Fensterbereich des kundenspezifischen Fahrzeugtürblatts bevorzugt ausgenommen. In einer Ausführungsform deckt die Blende im Wesentlichen das gesamte allgemeine Fahrzeugtürblatt an einer Seite, insbesondere einer Außenseite, ab.

Die Rahmenhohlprofile können zwei oder insbesondere genau zwei innere Rahmenhohlprofile und zwei oder insbesondere genau zwei äußere Rahmenhohlprofile umfassen. Hierbei können die inneren Rahmenhohlprofile im Wesentlichen gleich (i.S.v. identisch) ausgebildet sein und/oder die äußeren Rahmenhohlprofile im Wesentlichen gleich (i.S.v. identisch) ausgebildet sein. In einer Ausführungsform ist ein Längsendabschnitt eines Grundprofils (s.u.) eines inneren Rahmenhohlprofils zwischen zwei Seitenwandungen eines äußeren Rahmenhohlprofils aufgenommen.

Hierbei kann der betreffende Längsendabschnitt des Grundprofils (bearbeitet, bevorzugt gestuft) des inneren Rahmenhohlprofils, insbesondere ohne wenigstens einen Abschnitt eines Profilstegs und/oder ohne wenigstens einen Abschnitt eines Profilschenkels, jeweils zwischen zwei betreffenden, einander gegenüberliegenden Seitenwandungen des betreffenden äußeren Rahmenhohlprofils aufgenommen sein, wobei das Grundprofil des inneren Rahmenhohlprofils bevorzugt an einem betreffenden Grundprofil des äußeren Rahmenhohlprofils hauptsächlich oder im Wesentlichen ansitzt. Abgesehen von Befestigungsmitteln, ist dabei der betreffende Längsendabschnitt des inneren Rahmenhohlprofils in wenigstens zwei, bevorzugt in drei, translatorischen Richtungen gehemmt und bevorzugt teilweise formschlüssig im betreffenden Längsendabschnitt des äußeren Rahmenhohlprofils aufgenommen.

In einer Ausführungsform können einander betreffende Profilstege und/oder einander betreffende Profilschenkel der Rahmenhohlprofile in Umfangsrichtung des Fahrzeugtürblattrahmens im Wesentlichen fluchten. D.h. sämtliche einander betreffende Profilstege der Rahmenhohlprofile liegen jeweils im Wesentlichen in einer Ebene. Hierbei können sämtliche radial äußeren, vorderen Profilstege und sämtliche radial innere, vordere Profilschenkel im Wesentlichen in einer Ebene liegen. Ferner können einander betreffende Profilstege und/oder einander betreffende Profilschenkel einander betreffender Rahmenhohlprofile in einem mechanischen Kontaktbereich geschäftet sein.

In einer Ausführungsform können in einem Eckbereich des Fahrzeugtürblattrahmens ein einzelnes Rahmenhohlprofil oder beide betreffende Rahmenhohlprofile einen Radius besitzen. Der Radius dient einer Führung der jeweiligen Dichtung an/in dem Fahrzeugtürblattrahmen herum. Gemäß der Erfindung sind zwei unterschiedliche Rahmenhohlprofile bevorzugt ineinandergesteckt, bevorzugt geschäftet und bevorzugt vernietet, wobei an den Radien kein Versatz entsteht. Der jeweilige Radius kann als eine Stecknase für eine Dichtung, insbesondere eine Aufsteckdichtung dienen. Des Weiteren können im Wesentlichen die äußeren Rahmenhohlprofile die Radien für wenigstens eine Türdichtung aufweisen. Ferner können sämtliche Rahmenhohlprofile in den einander betreffenden Bereichen die Radien für eine Fensterdichtung konstituieren.

In einer Ausführungsform können sämtliche radial äußeren und vorderen Profilstege der Rahmenhohlprofile einen im Wesentlichen vollständig umlaufenden Dichtungsrand für eine vordere Türdichtung aufweisen. Ferner können sämtliche radial äußeren und hinteren Profilstege der Rahmenhohlprofile einen im Wesentlichen vollständig umlaufenden Dichtungsrand für eine hintere Türdichtung aufweisen. Des Weiteren können sämtliche radial inneren und vorderen Profilschenkel der Rahmenhohlprofile einen im Wesentlichen vollständig umlaufenden Dichtungsrand für eine Fensterdichtung aufweisen.

Darüber hinaus können wenigstens ein äußerer und/oder wenigstens ein innerer Dichtungsrand der Rahmenhohlprofile eine Riffelung aufweisen. D.h. eine Mehrzahl oder sämtliche äußeren Dichtungsränder und/oder eine Mehrzahl oder sämtliche inneren Dichtungsränder können eine Riffelung aufweisen. In einer Ausführungsform ist der Fahrzeugtürblattrahmen als ein vollständig umlaufender Profilrahmen ausgebildet. Darüber hinaus sind die ursprünglichen Hohlprofile bzw. die Rahmenhohlprofile bevorzugt stranggepresst.

In einer Ausführungsform sind die beiden horizontalen Rahmenhohlprofile in im Wesentlichen sämtlichen Schnittebenen des Fahrzeugtürblattrahmens zueinander im Wesentlichen spiegelsymmetrisch ausgebildet bzw. im Fahrzeugtürblattrahmen eingerichtet, wobei die Schnittebenen von einer Breitenachse und einer Hochachse des Fahrzeugtürblattrahmens aufgespannt sind. Analoges kann für die vertikalen Rahmenhohlprofile gelten. In einer Ausführungsform der Erfindung kann der grobe (z.B. abgesehen von Befestigungseinrichtungen (Durchgangslöcher für Schubblech, Mittelstrebe etc.), einer Ausnehmung für eine Schlosseinrichtung, einer Lagereinrichtung, einer Materialwegnehmung etc.) Fahrzeugtürblattrahmen um ca. 180° drehsymmetrisch bezüglich seiner Dickenachse ausgebildet sein; was analog für die horizontalen und/oder vertikalen Rahmenhohlprofile gelten kann. Ferner kann der grobe Fahrzeugtürblattrahmen im Wesentlichen punktsymmetrisch in im Wesentlichen sämtlichen Schnittebenen ausgebildet sein, welche von seiner Breitenachse und seiner Hochachse aufgespannt sind.

In einer Ausführungsform kann das allgemeine Fahrzeugtürblatt wenigstens einseitig ein bevorzugt gesicktes Schubblech und/ oder wenigstens einseitig eine ggf. gesickte Mittelstrebe aufweisen. Hierbei können das Schubblech und/oder die Mittelstrebe bevorzugt zwischen den vertikalen Rahmenhohlprofilen des Fahrzeugtürblattrahmens eingerichtet sein. D.h. das Fahrzeugtürblatt kann auf beiden Seiten, also neben einer Außenseite auch auf einer Innenseite, ein bevorzugt gesicktes Schubblech und/oder eine Mittelstrebe aufweisen.

Das Schubblech und/oder die Mittelstrebe kann wenigstens einseitig mit einem Rahmenhohlprofil vernietet (in einer Ausführungsform bevorzugt), verschraubt (in einer Ausführungsform bevorzugt) verschweißt und/oder durch eine sonstige Fügemethode verbunden sein, deren Funktionsprinzip auf einer Blechdoppelung beruht. D.h. das Schubblech und/oder die Mittelstrebe kann bzw. können beidseitig mit den Rahmenhohlprofilen vernietet, verschraubt und/oder verschweißt sein. Darüber hinaus kann das Schubblech mit dem dritten es betreffenden Rahmenhohlprofil vernietet, verschraubt und/oder verschweißt sein.

In einer Ausführungsform kann zwischen dem Schubblech und/ oder der Mittelstrebe, und wenigstens einem Rahmenhohlprofil Dichtmasse vorgesehen sein. D.h. zwischen dem Schubblech und/oder der Mittelstrebe und beiden Rahmenhohlprofilen kann Dichtmasse vorgesehen sein. Natürlich kann ebenfalls zwischen dem Schubblech und dem eben genannten dritten Rahmenhohlprofil Dichtmasse vorgesehen sein. ,Zwischen' soll hier und auch im Folgenden bedeuten, dass die Dichtmasse einerseits auf einer Fläche eines ersten Teils und andererseits an einem Rand eines Teils, also nicht als ein Sandwich aus drei Langen, vorgesehen ist.

Ferner kann das Schubblech und/oder die Mittelstrebe, und wenigstens ein Rahmenhohlprofil beschichtet sein. Des Weiteren kann die Mittelstrebe mit dem Schubblech vernietet, verschraubt, verschweißt und/oder durch eine sonstige Fügemethode verbunden sein, deren Funktionsprinzip auf einer Blechdoppelung beruht. Darüber hinaus kann zwischen dem Schubblech und der Mittelstrebe Dichtmasse vorgesehen sein. In Ausführungsformen ist wenigstens eine gesamte (großflächige) Seite, insbesondere wenigstens die gesamte Außenseite, des Fahrzeugtürblatts beschichtet.

Das erfindungsgemäße Fahrzeug weist ein erfindungsgemäßes kundenspezifisches Fahrzeugtürblatt auf. Die Erfindung ist auf ein Schienenfahrzeug (z.B.: Eisenbahnfahrzeug, Triebfahrzeug, Lokomotive, Triebkopf, Triebwagen, selbstfahrendes Spezialfahrzeug für bahnbetriebliche Aufgaben, Eisenbahnwagen bzw. Waggon (Schienenfahrzeug ohne eigenen Antrieb) etc.) anwendbar.

Aufgrund einer erfindungsgemäßen Desintegration der Außenblende aus dem allgemeinen Fahrzeugtürblatt (Stand der Technik) heraus und einer Neukonzipierung des erfindungsgemäßen kundenspezifischen Fahrzeugtürblatts als allgemeines Fahrzeugtürblatt wenigstens plus Außenblende ergeben sich eine Reihe von Vorteilen. Es ergibt sich ein deutlich geringerer Fertigungsaufwand, eine verbesserte Qualität, eine erhöhte Funktionalität, eine Reduzierung der Anforderungen an einen Lieferanten, eine Reduzierung einer Teilevielfalt sowie eine nicht unsignifikante Kosteneinsparung bei einem hohen Integrationsstand der Bauteile des Fahrzeugtürblatts.

Klebeverfahren sind auf ein geringes Maß eingeschränkt, somit entfallen eine hochwertige Klebequalifizierung und eine Klebedokumentation. Aufwändige Klebeaudits und damit verbundene Erstbemusterungen (FAI: First Article Inspection) entfallen.

Es ergibt sich ein größerer Lieferantenpool für eine Montage der Außenblende als bei einer herkömmlichen Außenblende. Es entfallen zusätzliche Bauteile bei gleichzeitiger Erhöhung der Funktionalität. So entfällt in einem Vergleich mit dem Stand der Technik ein in eine Außenblende eingeklebter Fensterrahmen, der gemäß der Erfindung ein direkt in den Fahrzeugtürblattrahmen integrierter Bestandteil ist. Die Außenblende ist ohne Abkleben und ohne Türausbau jederzeit einfach demontierbar, umlackierbar und austauschbar, wodurch sich geringere LCC-Kosten ergeben.

Die Außenblende liegt vor den vorhandenen Dichtungen, welche bei einer Demontage der Außenblende nicht demontiert werden müssen. Die Außenblende überdeckt (Eck-)Verbindungen bzw. Verbindungselemente des Fahrzeugtürblattrahmens (z.B. Niete, Schrauben oder ggf. auch Schweißnähte, welche somit nicht verschliffen werden müssen). Bei Anwesenheit einer thermischen Isolierung zwischen dem allgemeinen Fahrzeugtürblatt und der Außenblende ergibt sich eine verbesserte Wärmedämmung der Fahrzeugtür (keine direkte Kältebrücke aufgrund von thermisch schlecht leitenden Abstandshaltern zwischen Außenblende und allgemeinen Fahrzeugtürblatt). Ein Freiraum zwischen der Außenblende und dem Fahrzeugtürblattrahmen kann ggf. mit zusätzlichem Isoliermaterial aufgefüllt werden. Eine Bombierung oder eine anderweitige Anpassung der Außenblende (z.B. Kontur, Griffmulde etc.) ist ohne eine Änderung des Fahrzeugtürblattrahmens möglich.

Gemäß der Erfindung ergeben sich ferner für das allgemeine Fahrzeugtürblatt eine Reihe von Vorteilen. Es ergeben sich ein deutlich geringerer Fertigungsaufwand, eine verbesserte Qualität, eine Erhöhung einer Funktionalität, eine Reduzierung von Anforderungen an Lieferanten, eine Reduzierung einer Teilevielfalt sowie eine deutliche Kosteneinsparung. Im Einzelnen können sämtliche Schweißarbeiten entfallen und somit auch dafür notwendige Arbeiten, wie z.B. aufwändige Richtarbeiten und Nacharbeiten (Schleifen, Spachteln). Klebearbeiten werden auf ein geringes Maß eingeschränkt, wobei auf ein strukturelles Klebeverfahren verzichtet werden kann (Entfall einer aufgeklebten oder eingeklebten Außenblende und/oder eines Fensterrahmens), wodurch eine hochwertige Klebequalifizierung und eine Klebedokumentation entfallen. Hierdurch wiederum entfallen damit verbundene Erstbemusterungen sowie Schweißaudits und Klebeaudits.

Gemäß der Erfindung sind genauere Fertigungstoleranzen als beim Schweißen erzielbar (kein Schweißverzug). Es entfallen zusätzliche Bauteile bei gleichbleibender oder erhöhter Funktionalität sowie Formkosten für Gussteile. Darüber hinaus ergibt sich ein größerer Lieferantenpool für eine Herstellung der Strangpressprofile sowie eine mechanische Bearbeitung und Montage (Nieten, Schrauben) als bei einer Schweißkonstruktion. Gemäß der Erfindung entfallen sämtliche Eckverbindungsteile durch die integrierten Radien bzw. Stecknasen an den Rahmenhohlprofilen für die wenigstens eine umlaufende Türdichtung sowie die umlaufende Fensterdichtung, wobei an den Stecknasen kein Versatz entsteht. Die Dichtmasse und/oder die Beschichtung ermöglichen eine Druckdichtheit des Fahrzeugtürblatts auch ohne eine Außenblende.

Die Erfindung ist im Folgenden anhand von Ausführungsbeispielen unter Bezugnahme auf die beigefügte schematische und nicht maßstabsgetreue Zeichnung näher erläutert. Abschnitte, Elemente, Bauteile, Einheiten, Schemata und/oder Komponenten, welche eine identische, univoke oder analoge Ausbildung und/oder Funktion besitzen, sind in der Figurenbeschreibung (s.u.), der Bezugszeichenliste, den Patentansprüchen und in den Figuren (FIG.) der Zeichnung mit denselben Bezugszeichen gekennzeichnet. Eine mögliche, in der Erfindungsbeschreibung (s.o.) nicht erläuterte, in der Zeichnung nicht dargestellte und/oder nicht abschließende Alternative, eine statische und/oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

Bei der Erfindung kann ein Merkmal (Abschnitt, Element, Bauteil, Einheit, Komponente, Funktion, Größe etc.) positiv, d.h. vorhanden, oder negativ, d.h. abwesend, ausgestaltet sein, wobei ein negatives Merkmal als Merkmal nicht explizit erläutert ist, wenn nicht gemäß der Erfindung Wert darauf gelegt ist, dass es abwesend ist. Ein Merkmal dieser Spezifikation (Beschreibung, Bezugszeichenliste, Patentansprüche, Zeichnung) kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesen zugeordneten Merkmal, bzw. vice versa, in der Beschreibung, der Bezugszeichenliste, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale dieser Spezifikation sind (angesichts des (meist unbekannten) Stands der Technik) auch als optionale Merkmale interpretierbar; d.h. jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung, Sektion etc.), wodurch, z.B. unter Beachtung von Gleichwirkung und/oder Gleichwertigkeit, eine Verallgemeinerung eines oder dieses Merkmals möglich ist. In den lediglich beispielhaften Figuren zeigen:
- FIG 1: in einer Perspektivansicht ein Ausführungsbeispiel eines allgemeinen Fahrzeugtürblatts aufbauend auf einem Fahrzeugtürblattrahmen für ein erfindungsgemäßes kundenspezifisches Fahrzeugtürblatt mit einer erfindungsgemäßen Außenblende,
- FIG 2: in einer gegenüber der FIG 1 detaillierteren dreidimensionalen Ansicht, einen weggebrochen dargestellten, rechten oberen Eckbereich des Fahrzeugtürblattrahmens der FIG 1,
- FIG 3: in einer gegenüber der FIG 1 detaillierteren dreidimensionalen Ansicht, einen weggebrochen dargestellten, linken oberen Eckbereich des Fahrzeugtürblattrahmens der FIG 1,
- FIG 4: in einer zweidimensionalen Schnittansicht das Fahrzeugtürblatt aus der FIG 1 inkl. einer erfindungsgemäßen Außenblende, wobei ein kundenspezifisches Fahrzeugtürblatt in einem Bereich seines Schachtfensterausschnitts geschnitten dargestellt ist,
- FIG 5: eine zu FIG 1 analoge Perspektivansicht des kundenspezifischen Fahrzeugtürblatts, wobei das kundenspezifische Fahrzeugtürblatt auf seiner Außenseite ein Ausführungsbeispiel der erfindungsgemäßen Außenblende aufweist,
- FIG 6: in einer gegenüber der FIG 5 detaillierteren dreidimensionalen Ansicht, einen weggebrochen dargestellten, oberen Bereich des Fahrzeugtürblattrahmens der FIG 5.

Die Erfindung ist im Folgenden anhand von Ausführungsbeispielen einer Ausführungsform einer Variante eines erfindungsgemäßen kundenspezifischen Fahrzeugtürblatts 0 aufbauend auf einem erfindungsgemäßen allgemeinen Fahrzeugtürblatt 1 mit einem erfindungsgemäßen Fahrzeugtürblattrahmen 10 für ein Schienenfahrzeug näher erläutert (Schienenfahrzeugtürblatt 0/1, Schienenfahrzeug-Türblattrahmen 10). Die Erfindung ist jedoch nicht auf eine solche Variante, solche Ausführungsformen und/oder die nachfolgend erläuterten Ausführungsbeispiele beschränkt, sondern ist von grundlegenderer Natur, sodass die Erfindung auf sämtliche Fahrzeuge (s.o.) angewendet werden kann. In der Zeichnung sind nur diejenigen Abschnitte eines Gegenstands der Erfindung dargestellt, welche für ein Verständnis der Erfindung notwendig sind.

Ferner bezieht sich die Erläuterung der Erfindung anhand der Zeichnung im Folgenden auf eine Breitenrichtung B bzw. eine Breitenachse B, eine Dickenrichtung D bzw. Dickenachse D und eine Hochrichtung H bzw. eine Hochachse H sowie eine Umfangsrichtung U des Fahrzeugtürblattrahmens 10 bzw. des Fahrzeugtürblatts 0/1. Obwohl die Erfindung detaillierter durch bevorzugte Ausführungsbeispiele näher beschrieben und illustriert ist, so ist die Erfindung nicht durch die offenbarten Ausführungsbeispiele eingeschränkt. Andere Variationen können hieraus und/oder aus Obigem (Erfindungsbeschreibung) abgeleitet werden, ohne den Schutzumfang der Erfindung zu verlassen.

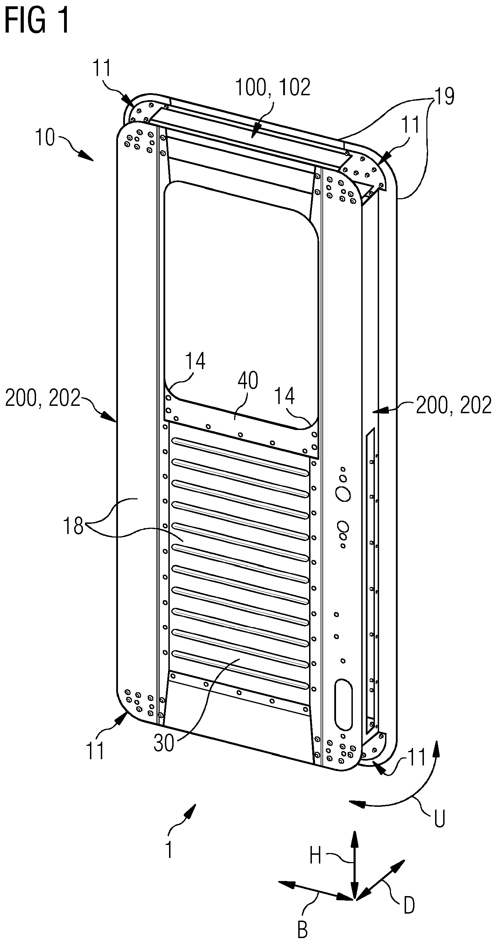

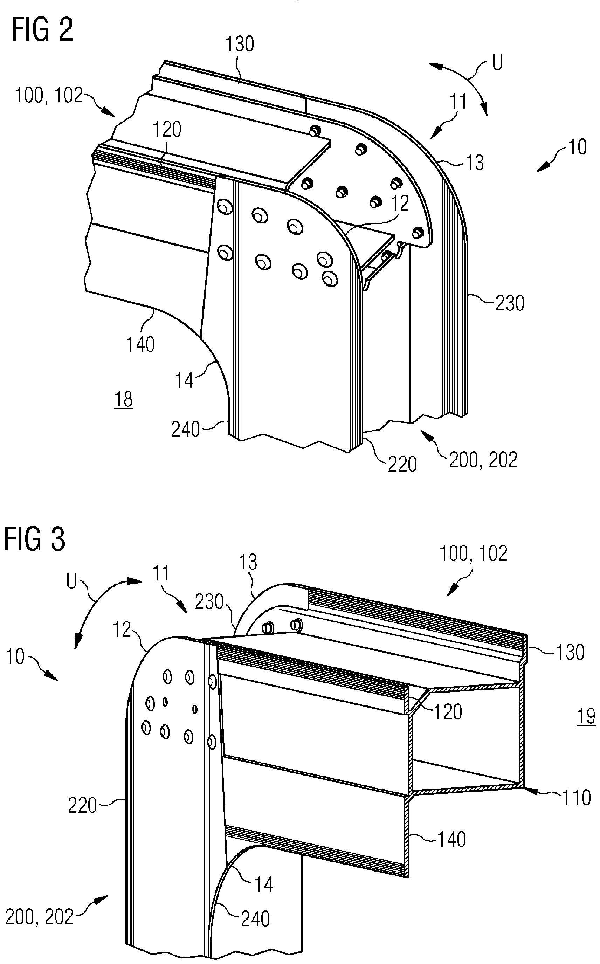

Die FIG 1 zeigt das allgemeine Fahrzeugtürblatt 1, ohne wenigstens eine Aufsteckdichtung, ein Schachtfenster sowie einer Mechanik dazu, eine Innenverkleidung, eine Außenblende 60, eine Ausnehmung für eine Schlosseinrichtung und/oder eine Lagereinrichtung etc., aufbauend auf dem Fahrzeugtürblattrahmen 10, wobei zwei Eckbereiche 11 des Fahrzeugtürblattrahmens 10 in den FIG 2 (rechter oberer Eckbereich 11 der FIG 1) und 3 (linker oberer Eckbereich 11 der FIG1) näher dargestellt sind. Gemäß der Erfindung ist der Fahrzeugtürblattrahmen 10 als ein Profilrahmen 10 ausgebildet, der bevorzugt vier Rahmenhohlprofile 102, 102; 202, 202 aufweist. Eine andere Anzahl von Rahmenhohlprofilen 102, ...; 202, ...; ... ist ggf. anwendbar.

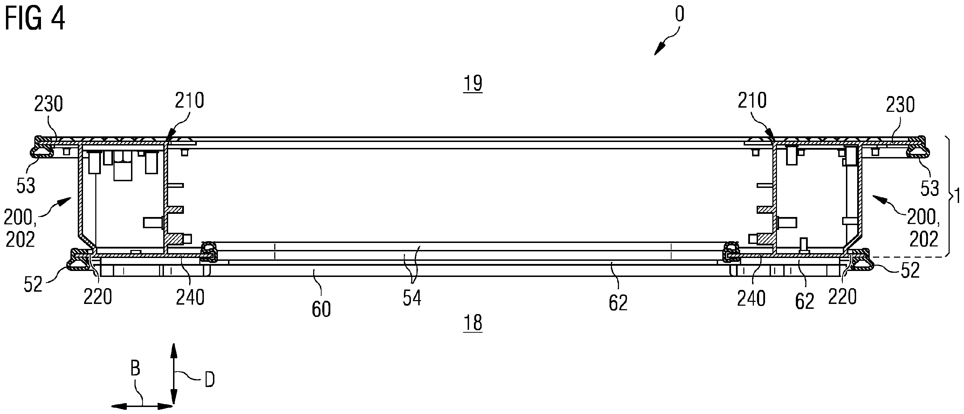

Gemäß der Erfindung stammen die Rahmenhohlprofile 102, ....; 202, ...; ... von zwei oder genau zwei unterschiedlich ausgestalteten Hohlprofilen 100, 200, wobei insbesondere deren Querschnitte (110, 120, 130, 140; 210, 220, 230, 240; vgl. insbesondere die FIG 3 mit der FIG 4) in Form und Größe unterschiedlich ausgestaltet sind. Vorliegend finden für den Fahrzeugtürblattrahmen 10 zwei horizontale, innere Rahmenhohlprofile 102, 102 und zwei vertikale, äußere Rahmenhohlprofile 202, 202 Anwendung. Es ist natürlich möglich, dies zu vertauschen, also vertikale, innere Rahmenhohlprofile und horizontale äußere Rahmenhohlprofile anzuwenden.

Die folgenden Ausführungen betreffen im Wesentlichen nur ein einzelnes inneres Rahmenhohlprofil 102 und ein einzelnes äußeres Rahmenhohlprofil 202 bzw. einen gemeinsamen Eckbereich 11 dieser beiden Rahmenhohlprofile 102, 202. Die folgenden Ausführungen sind jedoch analog auf die anderen Rahmenhohlprofile 102, 202 (bevorzugt zwei) und die anderen Eckbereiche 11 (bevorzugt drei) anwendbar.

Das innere Rahmenhohlprofil 102 (vgl. die FIG 3) weist ein Grundprofil 110 mit einem bevorzugt geschlossenen, hauptsächlich ,rechteckigen' oder hauptsächlich ,quadratischen' Querschnitt auf. Hierbei ist der Querschnitt ,fünfeckig', wobei eine Ecke (Draufsicht auf den Querschnitt: links oben) eines Rechtecks bzw. Quadrats abgeschrägt ausgebildet ist (fünfeckiger, hauptsächlich rechteckiger Querschnitt). D.h. das Grundprofil 110 ist als ein Mehrkantrohr bzw. ein Fünfkantrohr mit hauptsächlich rechteckigem oder quadratischem Querschnitt ausgebildet. Hierbei können natürlich Rundungen vorgesehen sein. Andere Formen, wie z.B. dreieckige, sechseckige, vieleckige Formen, ggf. mit Rundungen; Rundformen etc. sind natürlich anwendbar.

Ferner weist das Grundprofil 110 des inneren Rahmenhohlprofils 102 bevorzugt drei in Höhenrichtung H davon wegstehende laschenförmige Vorsprünge 120, 130, 140 auf, wobei bevorzugt ein jeder Vorsprung 120, 130, 140 als eine Verlängerung einer ihn betreffenden Seitenwendung des Grundprofils 110 ausgebildet ist. Bevorzugt liegen sämtliche laschenförmigen Vorsprünge 120, 130, 140 wenigstens mit einem freien Abschnitt nicht in einer Ebene der den jeweiligen Vorsprung 120, 130, 140 betreffenden Seitenwandung des Grundprofils 110. Bevorzugt sind diese Abschnitte jedoch parallel zur betreffenden Seitenwandung angeordnet, an welche sie bevorzugt integral angeschlossen sind (Parallelversatz).

So weist das Grundprofil 110 einen bevorzugt radial äußeren, vorderen (Außenseite 18 des Fahrzeugs) Profilsteg 120 auf, der bevorzugt im Wesentlichen vollständig von der betreffenden Seitenwandung des Grundprofils 110 abgesetzt ist. Der Profilsteg 120 kann einen Dichtungsrand aufweisen oder als ein solcher konstituiert sein. Dieser Dichtungsrand kann eine Riffelung aufweisen. Ferner weist das Grundprofil 110 einen bevorzugt radial äußeren, hinteren (Innenseite 19 des Fahrzeugs (Kabine, Lokkasten)) Profilsteg 130 auf, der bevorzugt nur abschnittsweise von der betreffenden Seitenwandung des Grundprofils 110 abgesetzt ist. Der Profilsteg 130 kann einen Dichtungsrand aufweisen oder als ein solcher konstituiert sein. Dieser Dichtungsrand kann ebenfalls eine Riffelung aufweisen.

Darüber hinaus weist das Grundprofil 110 einen bevorzugt radial inneren, vorderen Profilschenkel 140 auf, der bevorzugt im Wesentlichen vollständig von der betreffenden Seitenwandung des Grundprofils 110 abgesetzt ist. Der Profilschenkel 140 kann einen Dichtungsrand aufweisen oder als ein solcher konstituiert sein. Dieser Dichtungsrand kann wiederum ebenfalls eine Riffelung aufweisen. Der radial äußere, vordere Profilsteg 120 und der radial innere, vordere Profilschenkel 140 liegen bevorzugt in einer Ebene. - Ein jeweiliger Dichtungsrand dient dabei bevorzugt der Aufnahme einer Aufsteckdichtung 52, 53, 54 (vgl. die FIG 4).

Das äußere Rahmenhohlprofil 202 (vgl. die FIG 4) ist dabei im Wesentlichen formanalog zum inneren Rahmenhohlprofil 102 aufgebaut, wobei dessen bevorzugt drei laschenförmige Vorsprünge 220, 230, 240 (radial äußerer, vorderer Profilsteg 220, radial äußerer, hinterer Profilsteg 230, radial innerer, vorderer Profilschenkel 240) jedoch nicht in Höhenrichtung H davon wegstehen, sondern in Breitenrichtung B. Ferner liegen bevorzugt sämtliche laschenförmigen Vorsprünge 220, 230, 240 wenigstens mit einem Abschnitt, insbesondre vollständig, in einer Ebene mit der den jeweiligen Vorsprung 220, 230, 240 betreffenden Seitenwandung des Grundprofils 210, an welche sie bevorzugt integral angeschlossen sind (kein Parallelversatz). Ferner liegen der radial äußere, vordere Profilsteg 220 und der radial innere, vordere Profilschenkel 240 bevorzugt in einer Ebene.

Das äußere Rahmenhohlprofil 202 ist derart ausgestaltet, dass das Grundprofil 102 des inneren Rahmenhohlprofils 102, ggf. inkl. eines gebundenen Abschnitts z.B. seines äußeren, hinteren Profilstegs 130 (vgl. FIG 3), zwischen zwei Seitenwandungen des äußeren Rahmenhohlprofils 202 mit einer Spielpassung oder einer Übergangspassung aufnehmbar ist (vgl. FIG 2 und 3). D.h. die beiden Rahmenhohlprofile 102, 202 sind mit ihren Längsendabschnitten ineinander einsteckbar ausgebildet. Diese beiden einander betreffenden Rahmenhohlprofile 102, 202 können in ihren gegenseitigen Überlappungen (Eckbereiche 11) miteinander vernietet und/oder verschraubt werden. Ggf. sind zusätzlich Schweißnähte/Schweißpunkte anwendbar.

Ferner ergeben sich gegenseitige linienförmige Berührbereiche zwischen den einander betreffenden Profilstegen 120, 220; 130, 230 (vier) und den einander betreffenden Profilschenkeln 140, 240 (zwei). In diesen Bereichen sind die beiden einander betreffenden Rahmenhohlprofile 102, 202 bevorzugt komplementär geschäftet, sodass die sich an den Profilstegen 120, 220; 130, 230 bevorzugt im Wesentlichen vollständig umlaufende Dichtränder ausbilden, die in Dickenrichtung D im Wesentlichen keinen Versatz aufweisen. Es ist insbesondere möglich, eine Schäftung oder alle Schäftungen wegzulassen.

Bevorzugt das äußere Rahmenhohlprofil 202 ist in seinen beiden Eckbereichen 11 mechanisch derart bearbeitet, dass dort (Außen-)Radien 12, 13 ((Auf-)Stecknasen 12, 13) für die bevorzugt im Wesentlichen vollständig umlaufenden Türdichtungen 52, 53 ((Aufsteck-)Dichtungen 52, 53) vorgesehen sind. Ferner sind bevorzugt, das äußere Rahmenhohlprofil 202 und korrespondierend dazu das innere Rahmenhohlprofil 102 sowie ein zweites Mal das äußere Rahmenhohlprofil 202 und korrespondierend dazu eine Mittelstrebe 40 (s.u., Alternative Schubblech 30, s.u.) mechanisch derart bearbeitet, dass dort Radien 14 ((Ein-)Stecknasen 14) für die bevorzugt im Wesentlichen vollständig umlaufenden Fensterdichtung 54 ((Aufsteck-)Dichtung 54) vorgesehen sind. Die Stecknasen 12, 13, 14 können eine Riffelung aufweisen, um einen Halt der Dichtungen 52, 53, 54 zu erhöhen.

Damit zwischen den äußeren Rahmenhohlprofilen 202, 202 ein (Schacht-)Fenster einrichtbar ist, wird an die beiden Rahmenhohlprofile 202, 202 auf einer entsprechenden Höhe die ggf. gesickte Mittelstrebe 40 angenietet und/oder angeschraubt. Zwischen der Mittelstrebe 40 und dem unteren inneren Rahmenhohlprofil 102 wird ein bevorzugt gesicktes Schubblech 30 an die beiden äußeren Rahmenhohlprofile 202, 202, die Mittelstrebe 40 und das untere innere Rahmenhohlprofile 102 angenietet oder angeschraubt. Die Mittelstrebe 40 kann ggf. einstückig/integral mit Schubblech 30 ausgebildet sein. Das Schubblech 30 kann zusätzlich oder alternativ zu wenigstens einer Sicke wenigstens eine andere Verstärkungseinrichtung aufweisen.

In sämtlichen Eckbereichen 11 kann zwischen den dort einander betreffenden Rahmenhohlprofilen 102, 202 beim Zusammenstecken eine Dichtmasse eingebracht werden, damit der Fahrzeugtürblattrahmen 10 druckdicht ausbildbar ist. Vorzugsweise ist das Schubblech 30 und/oder die Mittelstrebe 40 ebenfalls mit Dichtmasse auf dem Fahrzeugtürblattrahmen 10 vorgesehen. Darüber hinaus ist ggf. zwischen dem Schubblech 30 und der Mittelstrebe 40 ebenfalls Dichtmasse vorgesehen. Zusätzlich oder alternativ können die Übergänge zwischen den einander betreffenden Bauteilen (Rahmenhohlprofile 102, 102; 202, 202 - Schubblech 30 - Mittelstrebe 40) bzw. der gesamte Fahrzeugtürblattrahmen 10 (ggf. einseitig, Außenseite 18 (außen und/oder innen)), ggf. auch zusätzlich, nachträglich mit einer Beschichtung abgedichtet werden, sodass das allgemeine Fahrzeugtürblatt 1 auch ohne eine Außenblende 60 druckdicht ist.

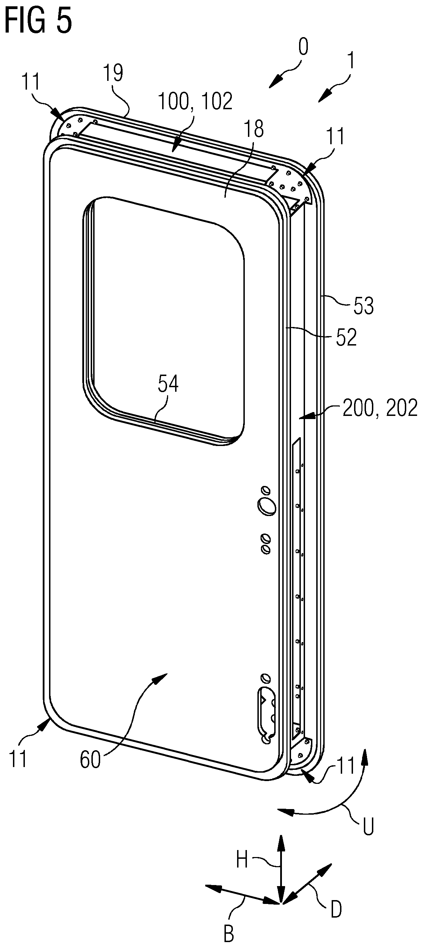

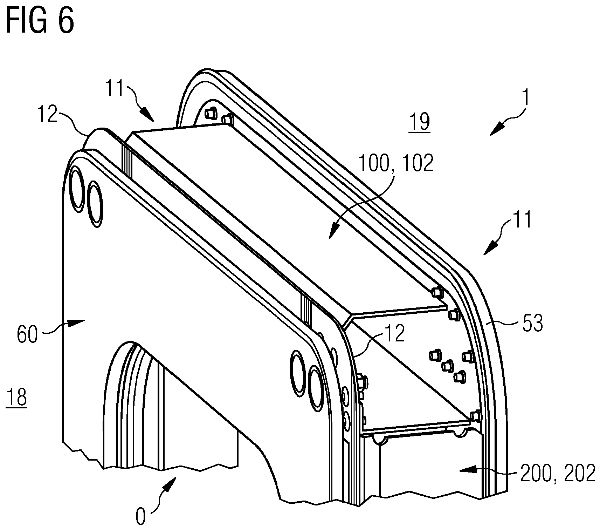

Gemäß der Erfindung weist eine Ausführungsform des kundenspezifischen Fahrzeugtürblatts 0 (FIG 4 bis 6) das oben erläuterte allgemeine Fahrzeugtürblatt 1 und eine z.B. als eine Aluminium-Sandwich-Blende 60, eine GFK-Blende 60 etc. ausgebildete Blende 60 auf. Hierbei ist das allgemeine Fahrzeugtürblatt 1 selbst druckdicht und/oder wasserdicht ausgebildet, wobei die Blende 60 als Außenblende 60 auf der Außenseite 18 am Fahrzeugtürblattrahmen 10 befestigt ist. Die Außenblende 60 ist bevorzugt als eine einfach demontierbare Außenblende 60 ausgebildet, wobei eine mechanische Verbindung der Außenblende 60 mit dem Fahrzeugtürblattrahmen 10 einfach lösbar ausgebildet ist. Dies kann durch ein Verschrauben oder eine Steckverbindung erfolgen. Ferner ist es möglich, die Außenblende 60 zu verkleben oder zu vernieten.

Zwischen der Außenblende 60 und dem allgemeinen Fahrzeugtürblatt 1 oder dem Fahrzeugtürblattrahmen 10 kann eine thermische Isolierung 62 eingerichtet sein (vgl. die FIG 4). Gemäß der Erfindung kann die Außenblende 60 wenigstens einen oder zwei Eckbereiche 11, oder alle Eckbereiche 11 des Fahrzeugtürblattrahmens 10 abdecken. Insbesondere bevorzugt ist es, dass die Außenblende 60 im Wesentlichen das gesamte allgemeine Fahrzeugtürblatt 1 an einer Seite 18, 19, insbesondere der Außenseite 18, abdeckt. Natürlich ist die Außenblende 60 in einem Fensterbereich des kundenspezifischen Fahrzeugtürblatts 0 ausgenommen.

## Patentansprüche

1. Kundenspezifisches Schienenfahrzeug-Türblatt (0) für eine Einstiegstür,
- umfassend eine Blende (60) und ein allgemeines Fahrzeugtürblatt (1),
- bei dem das allgemeine Fahrzeugtürblatt (1) einen tragenden Fahrzeugtürblattrahmen (10) aufweist,
- bei dem das allgemeine Fahrzeugtürblatt (1) selbst druckdicht und wasserdicht ausgebildet ist,
- bei dem die Blende (60) als eine demontierbare Außenblende (60) außen (18) am allgemeinen Fahrzeugtürblatt (1) oder am Fahrzeugtürblattrahmen (10) vorgesehen ist,
- bei dem eine mechanische Verbindung der Blende (60) mit dem allgemeinen Fahrzeugtürblatt (1) oder mit dem Fahrzeugtürblattrahmen (10) einfach lösbar ausgebildet ist, so dass ohne ein Beschädigen oder ein Zerstören eines mit der Blende verbundenen Teils des allgemeinen Fahrzeugtürblatts die Blende vom allgemeinen Fahrzeugtürblatt demontierbar ist,
- bei dem das kundenspezifische Fahrzeugtürblatt (0) ferner eine Innenverkleidung aufweist,
- bei dem das allgemeine Fahrzeugtürblatt (1) als ein vollständig funktionstüchtiges Fahrzeugtürblatt (1) ausgebildet ist,
- bei dem das allgemeine Fahrzeugtürblatt (1) ein Schachtfenster inklusive einer Mechanik, eine Aufsteckdichtung, eine Innenverkleidung, eine Lagereinrichtung und eine Ausnehmung für eine Schlosseinrichtung aufweist,
- bei dem der Fahrzeugtürblattrahmen (10) selbst druckdicht und wasserdicht ausgebildet ist.

2. Kundenspezifisches Fahrzeugtürblatt (0) gemäß vorhergehendem Anspruch,
- bei dem die Blende (60) auf das allgemeine Fahrzeugtürblatt (1) oder den Fahrzeugtürblattrahmen (10) aufgeschraubt oder aufgesteckt befestigt ist, oder
- bei dem zwischen der Blende (60) und dem allgemeinen Fahrzeugtürblatt (1) oder dem Fahrzeugtürblattrahmen (10) eine thermische Isolierung (62) vorgesehen ist, oder
- bei dem die Blende (60) als eine Aluminium-Sandwich-Blende (60) oder als eine GFK-Blende (60) ausgebildet ist.

3. Kundenspezifisches Fahrzeugtürblatt (0) gemäß vorhergehendem Anspruch,
- bei dem der Fahrzeugtürblattrahmen (10) vier, den eigentlichen Fahrzeugtürblattrahmen (10) konstituierenden Rahmenhohlprofile (102, 102, 202, 202) aufweist,
- bei dem die Rahmenhohlprofile (102, 102, 202, 202) aus zwei unterschiedlichen Hohlprofilen (100, 200) hergestellt sind.

4. Kundenspezifisches Fahrzeugtürblatt (0) gemäß einem der vorhergehenden Ansprüche,
- bei dem in einem Eckbereich (11) des Fahrzeugtürblattrahmens (10) einander betreffende Rahmenhohlprofile (102, 202) ineinander gesteckt oder geschäftet sind,
- bei dem in einem Eckbereich (11) des Fahrzeugtürblattrahmens (10) einander betreffende Rahmenhohlprofile (102, 202) miteinander vernietet, verschraubt oder verschweißt sind, und
- bei dem einander betreffende Dichtungsränder einander betreffender Rahmenhohlprofile (102, 202) in Umfangsrichtung (U; B, H) des Fahrzeugtürblattrahmens (10) im Wesentlichen fluchten.

5. Kundenspezifisches Fahrzeugtürblatt (0) gemäß einem der vorhergehenden Ansprüche, bei dem die Blende (60)
- einen Eckbereich (11) des Fahrzeugtürblattrahmens (10) abdeckt,
- in einem Fensterbereich des kundenspezifischen Fahrzeugtürblatts (0) ausgenommen ist, und/oder
- im Wesentlichen das gesamte allgemeine Fahrzeugtürblatt (1) an einer Außenseite (18) abdeckt.

6. Kundenspezifisches Fahrzeugtürblatt (0) gemäß einem der vorhergehenden Ansprüche,
- bei dem die Rahmenhohlprofile (102, 102, 202, 202) zwei innere Rahmenhohlprofile (102, 102) und zwei äußere Rahmenhohlprofile (202, 202) umfassen,
- bei dem die inneren Rahmenhohlprofile (102, 102) gleich ausgebildet sind, und
- bei dem die äußeren Rahmenhohlprofile (202, 202) gleich ausgebildet sind.

7. Kundenspezifisches Fahrzeugtürblatt (0) gemäß einem der vorhergehenden Ansprüche,
- bei dem ein Längsendabschnitt eines Grundprofils (110) eines inneren Rahmenhohlprofils (102) zwischen zwei Seitenwandungen eines äußeren Rahmenhohlprofils (202) aufgenommen ist,
- bei dem einander betreffende Profilstege (120, 220; 130, 230) oder einander betreffende Profilschenkel (140, 240) der Rahmenhohlprofile (102, 202) in Umfangsrichtung (U; B, H) des Fahrzeugtürblattrahmens (10) fluchten, oder
- bei dem einander betreffende Profilstege (120, 220; 130, 230) oder einander betreffende Profilschenkel (140, 240) einander betreffender Rahmenhohlprofile (102, 202) in einem mechanischen Kontaktbereich geschäftet sind.

8. Kundenspezifisches Fahrzeugtürblatt (0) gemäß einem der vorhergehenden Ansprüche,
- bei dem das allgemeine Fahrzeugtürblatt (1) wenigstens einseitig ein Schubblech (30) und wenigstens einseitig eine Mittelstrebe (40) aufweist,
- bei dem das Schubblech (30) und die Mittelstrebe (40) zwischen den vertikalen Rahmenhohlprofilen (202) des Fahrzeugtürblattrahmens (10) eingerichtet sind.

9. Kundenspezifisches Fahrzeugtürblatt (0) gemäß Anspruch 8,
- bei dem das Schubblech (30) und die Mittelstrebe (40) wenigstens einseitig mit einem Rahmenhohlprofil (202) vernietet oder verschraubt sind,
- bei dem zwischen dem Schubblech (30) und der Mittelstrebe (40) und wenigstens einem Rahmenhohlprofil (202) Dichtmasse vorgesehen ist,
- bei dem das Schubblech (30) und die Mittelstrebe (40) und wenigstens ein Rahmenhohlprofil (202) beschichtet sind,
- bei dem die Mittelstrebe (40) mit dem Schubblech (30) vernietet oder verschraubt ist, oder
- bei dem zwischen dem Schubblech (30) und der Mittelstrebe (40) Dichtmasse vorgesehen ist.

10. Schienenfahrzeug mit einem kundenspezifischen Fahrzeugtürblatt (0), das gemäß einem der vorhergehenden Ansprüche ausgebildet ist.

## Claims

1. Customer-specific rail vehicle door leaf (0) for an access door,
- comprising a panel (60) and a general vehicle door leaf (1) ,
- in the case of which rail vehicle door leaf (0) the general vehicle door leaf (1) has one load-bearing vehicle door leaf frame (10),
- in the case of which rail vehicle door leaf (0) the general vehicle door leaf (1) itself is of pressure-tight and water-tight configuration,
- in the case of which rail vehicle door leaf (0) the panel (60) is provided as an exterior panel (60) which can be dismantled on the outside (18) of the general vehicle door leaf (1) or of the vehicle door leaf frame (10),
- in the case of which rail vehicle door leaf (0) a mechanical connection of the panel (60) to the general vehicle door leaf (1) or to the vehicle door leaf frame (10) is of simply releasable configuration, with the result that the panel can be dismantled from the general vehicle door leaf without damage or destruction of a part of the general vehicle door leaf, which part is connected to the panel,
- in the case of which rail vehicle door leaf (0) the customer-specific vehicle door leaf (0) also has an interior trim panel,
- in the case of which rail vehicle door leaf (0) the general vehicle door leaf (1) is configured as a completely functional vehicle door leaf (1),
- in the case of which rail vehicle door leaf (0) the general vehicle door leaf (1) has a stowage shaft window including a mechanism, a plug-on seal, an interior trim panel, a bearing device and a recess for a lock device,
- in the case of which rail vehicle door leaf (0) the vehicle door leaf frame (10) itself is of pressure-tight and water-tight configuration.

2. Customer-specific vehicle door leaf (0) according to the preceding claim,
- in the case of which vehicle door leaf (0) the panel (60) is fastened in a screwed or plugged manner to the general vehicle door leaf (1) or the vehicle door leaf frame (10), or
- in the case of which vehicle door leaf (0) a thermal insulation (62) is provided between the panel (60) and the general vehicle door leaf (1) or the vehicle door leaf frame (10), or
- in the case of which vehicle door leaf (0) the panel (60) is configured as an aluminium sandwich panel (60) or as a GFRP panel (60).

3. Customer-specific vehicle door leaf (0) according to the preceding claim,
- in the case of which vehicle door leaf (0) the vehicle door leaf frame (10) has four frame hollow profiles (102, 102, 202, 202) which constitute the actual vehicle door leaf frame (10) ,
- in the case of which vehicle door leaf (0) the frame hollow profiles (102, 102, 202, 202) are produced from two different hollow profiles (100, 200).

4. Customer-specific vehicle door leaf (0) according to one of the preceding claims,
- in the case of which vehicle door leaf (0) frame hollow profiles (102, 202) which relate to one another are plugged or fitted into one another in a corner region (11) of the vehicle door leaf frame (10),
- in the case of which vehicle door leaf (0) frame hollow profiles (102, 202) which relate to one another are riveted, screwed or welded to one another in a corner region (11) of the vehicle door leaf frame (10), and
- in the case of which vehicle door leaf (0) seal edges which relate to one another of frame hollow profiles (102, 202) which relate to one another are substantially flush in the circumferential direction (U; B, H) of the vehicle door leaf frame (10).

5. Customer-specific vehicle door leaf (0) according to one of the preceding claims, in the case of which vehicle door leaf (0) the panel (60)
- covers a corner region (11) of the vehicle door leaf frame (10) ,
- is cut out in a window region of the customer-specific vehicle door leaf (0), and/or
- covers substantially the entire general vehicle door leaf (1) on an outer side (18).

6. Customer-specific vehicle door leaf (0) according to one of the preceding claims,
- in the case of which vehicle door leaf (0) the frame hollow profiles (102, 102, 202, 202) comprise two inner frame hollow profiles (102, 102) and two outer frame hollow profiles (202, 202),
- in the case of which vehicle door leaf (0) the inner frame hollow profiles (102, 102) are of identical configuration, and
- in the case of which vehicle door leaf (0) the outer frame hollow profiles (202, 202) are of identical configuration.

7. Customer-specific vehicle door leaf (0) according to one of the preceding claims,
- in the case of which vehicle door leaf (0) a longitudinal end section of a base profile (110) of an inner frame hollow profile (102) is received between two side walls of an outer frame hollow profile (202),
- in the case of which vehicle door leaf (0) profile webs (120, 220; 130, 230) which relate to one another or profile limbs (140, 240) which relate to one another of the frame hollow profiles (102, 202) are flush in the circumferential direction (U; B, H) of the vehicle door leaf frame (10), or
- in the case of which vehicle door leaf (0) profile webs (120, 220; 130, 230) which relate to one another or profile limbs (140, 240) which relate to one another of frame hollow profiles (102, 202) which relate to one another are fitted in a mechanical contact region.

8. Customer-specific vehicle door leaf (0) according to one of the preceding claims,
- in the case of which vehicle door leaf (0) the general vehicle door leaf (1) has a thrust plate (30) at least on one side and a centre strut (40) at least on one side,
- in the case of which vehicle door leaf (0) the thrust plate (30) and the centre strut (40) are set up between the vertical frame hollow profiles (202) of the vehicle door leaf frame (10).

9. Customer-specific vehicle door leaf (0) according to Claim 8,
- in the case of which vehicle door leaf (0) the thrust plate (30) and the centre strut (40) are riveted or screwed to a frame hollow profile (202) at least on one side,
- in the case of which vehicle door leaf (0) sealing compound is provided between the thrust plate (30) and the centre strut (40) and at least one frame hollow profile (202),
- in the case of which vehicle door leaf (0) the thrust plate (30) and the centre strut (40) and at least one frame hollow profile (202) are coated,
- in the case of which vehicle door leaf (0) the centre strut (40) is riveted or screwed to the thrust plate (30), or
- in the case of which vehicle door leaf (0) sealing compound is provided between the thrust plate (30) and the centre strut (40).

10. Rail vehicle having a customer-specific vehicle door leaf (0) which is configured according to one of the preceding claims.

## Revendications

1. Vantail de porte de véhicule ferroviaire (0) personnalisé pour une porte d'accès,
- comprenant un panneau (60) et un vantail de porte de véhicule ordinaire (1),
- dans lequel le vantail de porte de véhicule ordinaire (1) comprend un cadre porteur de vantail de porte de véhicule (10) ,
- dans lequel le vantail de porte de véhicule (1) ordinaire est conçu en lui-même de façon étanche à la pression et étanche à l'eau,
- dans lequel le panneau (60) est agencé sous forme d'un panneau extérieur (60) démontable à l'extérieur (18) sur le vantail de porte de véhicule ordinaire (1) ou sur le cadre porteur de vantail de porte de véhicule (10)
- dans lequel une liaison mécanique du panneau (60) avec le vantail de porte de véhicule ordinaire (1) ou avec le cadre de vantail de porte de véhicule (10) est formée de manière facilement détachable, de manière à ce que le panneau puisse être démonté du vantail de porte de véhicule ordinaire sans endommager ni détruire une partie du vantail de porte de véhicule ordinaire reliée au panneau,
- dans lequel le vantail de porte de véhicule personnalisé (0) comprend en outre un habillage intérieur,
- dans lequel le vantail de porte de véhicule ordinaire (1) est conçu sous forme d'un vantail de porte de véhicule (1) entièrement fonctionnel,
- dans lequel le vantail de porte de véhicule (1) ordinaire comprend une fenêtre de regard incluant un mécanisme, un joint accroché, un habillage intérieur, un dispositif de support et un évidement pour un moyen de serrure, et
- dans lequel le cadre de vantail de porte de véhicule (10) est conçu en lui-même de façon à être étanche à la pression et étanche à l'eau.

2. Vantail de porte de véhicule personnalisé (0) selon la revendication précédente,
- dans lequel le panneau (60) est fixé par vissage ou par accrochage sur le vantail de porte de véhicule ordinaire (1) ou le cadre de vantail de porte de véhicule (10), ou
- dans lequel une isolation thermique (62) est agencée entre le panneau (60) et le vantail de porte de véhicule ordinaire (1) ou le cadre de vantail de porte de véhicule (10), ou
- dans lequel le panneau (60) est conçu sous forme d'un panneau sandwich d'aluminium (60) ou d'un panneau de composite renforcé de fibres de verre (60).

3. Vantail de porte de véhicule personnalisé (0) selon la revendication précédente,
- dans lequel le cadre de vantail de porte de véhicule (10) comprend quatre profilés creux de cadre (102, 102, 202, 202) constituant le cadre de vantail de porte de véhicule (10) proprement dit,
- dans lequel les profilés creux de cadre (102, 102, 202, 202) sont fabriqués à partir de deux profilés creux différents (100, 200).

4. Vantail de porte de véhicule personnalisé (0) selon l'une des revendications précédentes,
- dans lequel des profilés creux de cadre (102, 202) concernés mutuellement sont engagés ou emboîtés l'un dans l'autre dans une zone d'angle (11) du cadre de vantail de porte de véhicule (10),
- dans lequel des profilés creux de cadre (102, 202) concernés mutuellement sont rivetés, vissés ou soudés l'un à l'autre dans une zone d'angle (11) du cadre de vantail de porte de véhicule (10), et
- dans lequel des bords de joint concernés mutuellement de profilés creux de cadre (102, 202) concernés mutuellement sont essentiellement alignés dans la direction périphérique (U, B, H) du cadre de vantail de porte de véhicule (10).

5. Vantail de porte de véhicule personnalisé (0) selon l'une des revendications précédentes, dans lequel le panneau (60)
- recouvre une zone d'angle (11) du cadre de vantail de porte de véhicule (10),
- est évidé dans une zone de fenêtre du vantail de porte de véhicule personnalisé (0), et/ou
- recouvre essentiellement le vantail de porte de véhicule ordinaire (1) sur un côté extérieur (18).

6. Vantail de porte de véhicule personnalisé (0) selon l'une des revendications précédentes,
- dans lequel les profilés creux de cadre (102, 102, 202, 202) comprennent deux profilés creux de cadre intérieurs (102, 102) et deux profilés creux de cadre extérieurs (202, 202) ,
- dans lequel les profilés creux de cadre intérieurs (102, 102) sont formés de façon identique, et
- dans lequel les profilés creux de cadre extérieurs (202, 202) sont formés de façon identique.

7. Vantail de porte de véhicule personnalisé (0) selon l'une des revendications précédentes,
- dans lequel une partie d'extrémité longitudinale d'un profilé de base (110) d'un profilé creux de cadre intérieur (102) est reçue entre deux parois latérales d'un profilé creux de cadre extérieur (202),
- dans lequel des âmes de profilé concernées mutuellement (120, 220, 130, 230) ou des branches de profilé concernées mutuellement (140, 240) des profilés creux de cadre (102, 202) sont alignées dans la direction périphérique (U, B, H) du cadre de vantail de porte de véhicule (10), ou
- dans lequel des âmes de profilé concernées mutuellement (120, 220, 130, 230) ou des branches de profilé concernées mutuellement (140, 240) de profilés creux de cadre (102, 202) concernés mutuellement sont emboîtées dans une zone de contact mécanique.

8. Vantail de porte de véhicule personnalisé (0) selon l'une des revendications précédentes,
- dans lequel le vantail de porte de véhicule ordinaire (1) comprend au moins une plaque de cisaillement (30) au moins d'un côté et une entretoise centrale (40) au moins d'un côté,
- dans lequel la plaque de cisaillement (30) et l'entretoise centrale (40) sont disposées entre les profilés creux de cadre verticaux (202) du cadre de vantail de porte de véhicule (10).

9. Vantail de porte de véhicule personnalisé (0) selon la revendication 8,
- dans lequel la plaque de cisaillement (30) et l'entretoise centrale (40) sont rivetées ou vissées au moins d'un côté à un profilé creux de cadre (202),
- dans lequel, entre la plaque de cisaillement (30) et l'entretoise centrale (40) et au moins un profilé creux de cadre (202), une masse d'étanchéité est disposée,
- dans lequel la plaque de cisaillement (30) et l'entretoise centrale (40) et au moins un profilé creux de cadre (202) sont revêtus,
- dans lequel l'entretoise centrale (40) est rivetée ou vissée à la plaque de cisaillement (30), ou
- dans lequel une masse d'étanchéité est disposée entre la plaque de cisaillement (30) et l'entretoise centrale (40).

10. Véhicule ferroviaire comprenant un vantail de porte de véhicule personnalisé (0), qui est conçu selon l'une des revendications précédentes.
